# EUROPÄISCHE PATENTSCHRIFT

(11) **EP 2 766 248 B1**
(45) Veröffentlichungstag und Bekanntmachung des Hinweises auf die Patenterteilung: **15.02.2017**
(21) Anmeldenummer: 12769330.7
(22) Anmeldetag: 02.10.2012
(51) Int. Cl.: B62D 29/00, B62D 25/08

(54) **FRONTENDMODUL**
FRONT END MODULE
MODULE D'EXTRÉMITÉ AVANT

(30) Priorität: 14.10.2011 DE 102011116208
(43) Veröffentlichungstag der Anmeldung: 20.08.2014
(73) Patentinhaber: Daimler AG, 70327 Stuttgart (DE)
(72) Erfinder: MAIER, Hans-Peter, 72202 Nagold (DE); KEHRES, Stefan, 81675 München (DE); RÖSCH, Jochen, 71034 Böblingen (DE)
(74) Vertreter: JENSEN & SON
(86) Internationale Anmeldenummer: PCT/EP2012/004133
(87) Internationale Veröffentlichungsnummer: WO 2013/053447

(56) Entgegenhaltungen:
- EP-A1- 1 036 729
- EP-A1- 1 724 185
- WO-A2-2004/056610

## Beschreibung

Die Erfindung betrifft ein Frontendmodul gemäß dem Oberbegriff des Patentanspruches 1.

Ein gattungsgemäßes Frontendmodul ist aus der EP1 036 729 A1 bekannt. Dort ist ein Frontendmodul für ein Kraftfahrzeug ersichtlich, das einen rohrförmigen Querträger und Spritzgußkomponenten beinhaltet, die am Querträger angespritzt und separat zum Querträger miteinander verbunden sind.

In der EP 1 849 686 A1 ist ein mittels fluidischen Innenhochdrucks umgeformtes Rohr offenbart, das zwei axial beabstandete Einschnürungen aufweist, in denen jeweils ein Spritzgußbauteil aus Kunststoff angespritzt ist. Hierzu sind Ringe vorgesehen, die das Rohr umgeben und von denen vertikal nach unten das als Ständer bezeichnete Spritzgußbauteil einstückig abragt. Die beiden separaten Spritzgußbauteile begrenzen miteinander eine Aufnahme für den Motorkühler. Seitlich schließt sich jeweils ein Bauraum für Leuchteinheiten an. Das Verbundbauteil aus dem metallischen Rohr und den angespritzten Kunststoffbauteilen bilden das Frontendmodul. Der Halt der beiden Ständer auf dem Rohr, der aus der Aufschrumpfung des Kunststoffs auf das Rohr resultiert, ist jedoch gegenüber höheren mechanischen Belastungen unzureichend, so dass die Ständer um das Rohr relativ leicht drehbar sind als auch innerhalb der Erstreckung der Einschnürungen axial verrutschen können.

Der Erfindung liegt die Aufgabe zugrunde, ein gattungsgemäßes Frontendmodul dahingehend weiterzubilden, dass ein verbesserter Halt der Spritzgußbauteile am Querträger in einfacher Weise erreicht wird.

Die Aufgabe ist erfindungsgemäß durch die Merkmale des Patentanspruches 1 gelöst.

Aufgrund der separaten Verbindung zumindest von zwei der angespritzten Kunststoffbauteile, bei die mittelbare Verbindung durch den Querträger ausgenommen ist, wird eine Kraftverteilung erzielt, die ein Lösen des jeweiligen Kunststoffbauteils auf dem Querträger zumindest erschwert, wenn nicht gar verhindert. Hierbei wird zudem bei einer Belastung eines der Kunststoffbauteile um die Querträgerachse aufgrund der Verbindung ein Trägheitsmoment im anderen Kunststoffbauteil erzeugt, das wiederum eine Gegenkraft auf das belastete Kunststoffbauteil ausübt, die eine Torsionsspannung in dem Verbindungselement der Verbindung verursacht und somit der Belastung entgegenwirkt und daher den Halt des einen Kunststoffbauteils verbessert.

Die Erfindung beinhaltet des Weiteren, dass die Spritzgußbauteile durch zwei senkrecht nach unten abragende axial beabstandete Pfeiler gebildet sind. Diese begrenzen seitlich die Motorkühleraufnahme und sind von den Enden des Querträgers axial beabstandet. Der Querträger weist angespritzte Längs- und Querrippen auf, die gemeinsam ein den Querträger einschließendes Netz bilden und die Pfeiler im Bereich des Querträgers miteinander verbinden. Durch die Ausbildung eines Netzes, das den Querträger im Zwischenraum zwischen den Pfeiler einschließt, wird eine hochsteife Verbindung mit geringem Bauraumbedarf und Materialeinsatz geschaffen, die nicht nur in sich in alle Richtungen steif ist sondern auch den gesamten Kunststoffkomplex und den Querträger versteift. Infolge der hochsteifen Verbindung wird ein sicherer Halt für die Kunststoffbauteile auf dem Querträger auch bei hohen mechanischen Kräften geschaffen.

In einer vorteilhaften Weiterbildung der Erfindung ist der Querträger gebogen, wobei zumindest eines der Kunststoffbauteile in einem Biegungsbereich des Querträgers über einen Längenabschnitt hinweg angeordnet ist. Hierdurch wird den Kunststoffbauteilen ein besonders starker Halt auf dem Querträger verliehen, da das im Biegungsbereich festgelegte Kunststoffbauteil axial und radial nicht mehr bzw. höchstens unter Ausübung sehr großer Kräfte beweglich ist. In einer weiteren vorteilhaften Weiterbildung der Erfindung ist der Profilquerschnitt des rohrförmigen Querträgers zumindest lokal unrund ausgebildet, wobei zumindest eines der Kunststoffbauteile auf dieser unrunden Stelle platziert ist. Auch hierdurch wird in Umfangsrichtung des Querträgers dem Kunststoffbauteil ein verbesserter Halt gegeben, wobei dieses drehfest auf dem Querträger festgelegt ist. Mit der zusätzlichen Anordnung im Biegebereich weist das Kunststoffbauteil bzw. die miteinander verbundenen Kunststoffbauteile einen besonders guten Halt auf dem Querträger auf.

In einer weiteren bevorzugten Ausgestaltung der Erfindung ist die Verbindung der Kunststoffbauteile stoffschlüssig ausgebildet. Dies vereinfacht die Ausbildung der Verbindung in erheblichem Maße, da keinerlei Verbindungselemente erforderlich sind und lediglich eine einzige Kavität für die auszubildenden und zu verbindenden Kunststoffbauteile vonnöten ist. Die Kunststoffbauteile können in einem einzigen Arbeitsschritt und einem einzigen Werkzeug gleichzeitig und somit verfahrensökonomisch vorteilhaft hergestellt werden. Die Stoffschlüssigkeit erbringt zudem eine verbesserte Stabilität für die Kunststoffbauteilanordnung. Denkbar ist, alternativ oder zusätzlich zur Stoffschlüssigkeit einen Formschluss zwischen den Bauteilen vorzusehen. Hierzu können die Bauteile zu unterschiedlichen Zeitpunkten angespritzt sein, so dass das bereits erstarrte Bauteil mit Formschlusselementen wie Erhebungen oder Mulden ausgestaltet ist, die vom noch flüssigen oder teigigen Spritzguß des anderen Bauteils oder der anderen Bauteile formschlüssig eingefasst werden. Durch die Gußwärme des noch flüssigen Spritzgusses ist es möglich, dass das bereits erstarrte Bauteil leicht anschmilzt, so dass gleichzeitig mit dem Formschluss auch ein Stoffschluss erreicht werden kann.

Der Querträger kann ebenfalls Formschlusselemente aufweisen, die vom Spritzguß der gebildeten Bauteile umschlossen sind bzw. die mit dem Spritzguß beim Anspritzen eine haltgebende Wirkverbindung eingegangen sind. Diese können beispielsweise durch eine Umformung des hohlen Querträgers ausgebildet sein, insbesondere mittels fluidischen Innenhochdrucks oder durch eine Zusammenwirkung des besagten Innenhochdrucks mit einer mechanischen Drückbearbeitung, beispielsweise mittels eines Stempels. Auch kann der Querträger bevorzugt eine von einer rotationssymmetrischen Querschnittskontur abweichenden Form aufweisen, beispielsweise eine ovale oder rechteckige Form. Diese ist bevorzugt dort anzufinden, wo der Spritzguss am Querträger anliegt, so dass auch durch die Querschnittsform für den angespritzten Kunststoff eine Drehsicherung und dadurch ein verbessert Halt auf dem Querträger gegeben ist.

Gemäß einer bevorzugten Weiterbildung der Erfindung werden aufgrund der Ausbildung der Spritzgußbauteile als Pfeiler multifunktionale Bauteile geschaffen, die wie hier nicht nur einen Rahmen für die Motorkühleraufnahme bilden sondern auch nach außen hin einen Teilrahmen für Leuchteinheiten bilden, an dem einstückig Befestigungsstellen für die Leuchteinheit ausgebildet sind. Des Weiteren können an den Pfeilern ebenfalls einstückig parallelogrammartige Aufnahmen für die Crashboxen und/oder eine Einführvorrichtung in den unteren Längsträger und/oder eine Einhängungsöse für die Standheizung und/oder für den Waschwasserbehälter und/oder und/oder für die Z-Abstützung durch den Spritzgießvorgang ausgeformt sein.

Der dadurch bereits hochintegrative Charakter des Frontendmoduls wird dadurch noch gesteigert, dass gemäß einer weiteren bevorzugten Ausbildung der Erfindung die Rippen zwischen den Pfeilern Ausgangpunkte für zahlreiche funktionelle Ausgestaltungen des Kunststoffspritzgußkomplexes sind. So sind diese einstückig mit einem Dichtrahmen für den Motorkühler und/oder mit Befestigungselementen für den Abstandsregel-Tempomat und/oder für eine Abweisplatte zur Verhinderung von Schneeansaugung und/oder für den Motorkühler und/oder mit Ausrichtelementen für einen Stoßfänger und den Motorkühler und/oder mit Leitwänden für die Rohluftansaugung und/oder mit Aufnahmen für Motorhaubenpuffer und/oder mit einer Einhängevorrichtung für eine Stützstrebe zur Abstützung der Motorhaube und/oder Auflageplatten für den oberen Rand eines Karosseriebauteils verbunden.

Weiterhin konnten bevorzugt die Enden des Querträgers aufgespritzte, miteinander verbundene Quer- und Längsrippen aufweisen, die einstückig Aufnahmen für Motorhaubenpuffer und/oder für die Befestigung eines Handhabungsgeräts zum Transport und Positionierung des Frontendmoduls in der Montage tragen. Diese Kunststoffumspritzungen können aus Bauraum- und/oder Gewichtseinsparungsüberlegungen separat von dem oben geschilderten Kunststoffspritzgußkomplex ausgebildet sein. Es ist jedoch durchaus denkbar, dass für einen verbesserten Halt auf dem Querträger diese Kunststoffumspritzungen ebenfalls mit dem Kunststoffspritzgußkomplex einstückig verbunden sind.

In einer weiteren bevorzugten Ausgestaltung der Erfindung weist der Querträger Befestigungselemente für das Motorhaubenschloss auf. Diese werden in Form von Löchern repräsentiert, mittels derer das Schloss beispielweise angeschraubt werden kann. Die Löcher können positionsgenau und mit hochpräzisem Lochbild während des Umformvorgangs des Querträgers, der durch Innenhochdruckumformen erfolgt, erzeugt werden. Hierzu sind in das Umformwerkzeug Stanzstempel integriert, die nicht nur Lochbutzen aus dem rohrförmigen Querträger ausstanzen können sondern auch die geschaffenen Löcher hochdruckdicht verschließen. Dies wird durch eine Konizität der Stempel erreicht, die sich an die Schneidkante anschließt und in das Loch eintaucht. Während des Umformvorgangs oder gleich im Anschluss daran wird der Kunststoff eingespritzt, der nach Erstarren die teilweise hochfiligranen Kunststoffbauteile bildet. Mit Abschluss der Umformung wird der Innenhochdruck auf einen Stützdruck abgesenkt, so dass ein Kollabieren des Querträgers durch den anfallenden Spritzgießdruck verhindert wird.

Im Folgenden ist die Erfindung anhand eines in der Zeichnung dargestellten Ausführungsbeispiels näher erläutert.

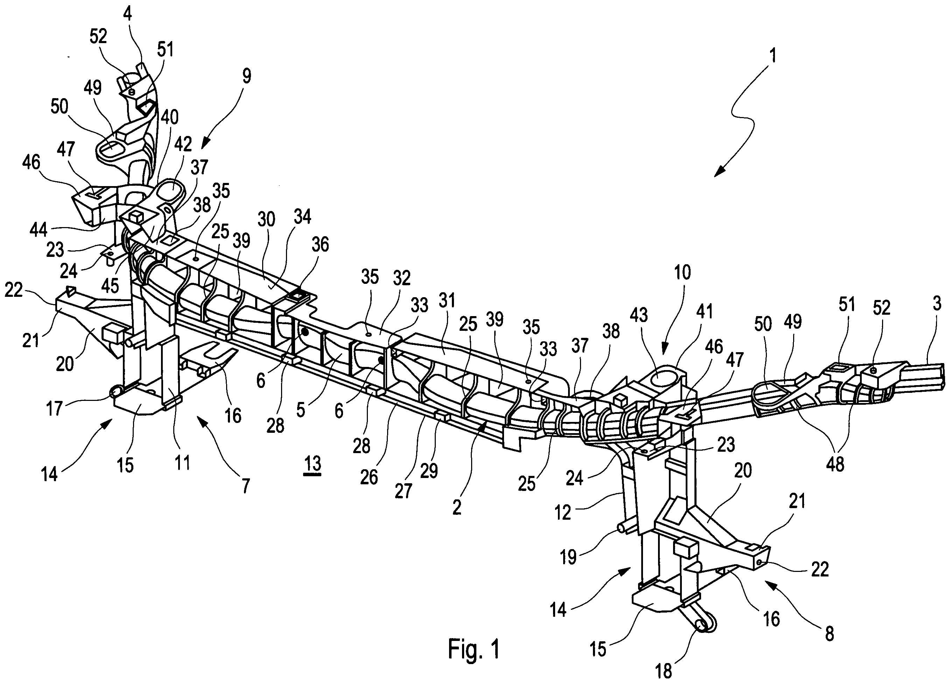

Dabei zeigt die Figur 1 in einer perspektivischen Ansicht ein erfindungsgemäßes Frontendmodul mit einem mit Kunststoff umspritzten Querträger.

In der Figur 1 ist ein Frontendmodul 1 für ein Kraftfahrzeug mit einem rohrförmigen Querträger 2 und Spritzgußbauteilen aus Kunststoff dargestellt, die an dem Querträger 2 angespritzt sind. Der Querträger 2 kann aus einem metallischen Werkstoff, insbesondere einem Leichtmetall oder einer Leichtmetalllegierung bestehen. Denkbar ist auch die Verwendung von faserverstärktem Kunststoff.

Der Querträger 2 weist einen gebogenen Verlauf auf, wobei seine Enden 3 und 4 seitlich nach hinten, also zum Fahrzeugheck hin weisen. In der Mitte 5 ist der Querträger wellenförmig ausgebildet und besitzt dort Befestigungselemente 6 in Form von Schraublöchern für das Motorhaubenschloss.

Der Querschnitt des Querträgers ist bedarfsgerecht an die jeweils anfallenden mechanischen und bauraumspezifischen Anforderungen angepasst und weicht weitestgehend von einer Rotationssymmetrie ab. Hierbei herrscht insbesondere eine kastenförmige Geometrie vor. Die Enden 3 und 4 sind abgeflacht um eine bessere Anbindung an die obere Längsträgerebene zu gewährleisten.

Die Spritzgußbauteile beinhalten zwei senkrecht nach unten abragende axial beabstandete Pfeiler 7 und 8, die im Biegungsbereich 9 und 10 des Querträgers 2 angeordnet sind. Die von den Enden 3,4 des Querträgers 2 axial beabstandeten Pfeiler 7 und 8 begrenzen an ihren einander zugewandten Seiten 11,12 die Motorkühleraufnahme 13 seitlich.

Beide Pfeiler 7 und 8 weisen am unteren Ende 14 eine rahmenförmige Aufnahme 15 mit parallelogrammartiger Kontur für eine Crashbox auf, wobei sich an die Aufnahme 15 nach hinten eine stegartige Einführvorrichtung 16 in einen jeweiligen unteren Längsträger anschließt. Am Pfeiler 7 befindet sich am unteren Ende 14 neben der Aufnahme 15 nach außen hin abragend eine Einhängungsöse 17 für eine Standheizung. In gleicher Weise schließt sich am unteren Ende 14 des Pfeilers 8 eine Einhängeöse 18 für einen Waschwasserbehälter an. Auf halber Höhe ist am Pfeiler 8 innenseitig, also auf dessen Seite 12 eine Befestigungsstelle 19 für die Z-Abstützung ausgeformt. Des Weiteren kragt an beiden Pfeilern 7 und 8 oberhalb der Aufnahme 15 jeweils ein Arm 20 nach außen ab, an dessen Ende 21 eine Befestigungsstelle 22 für die Leuchteinheit ausgebildet ist. In Querträgernähe am oberen Ende der Pfeiler 7 und 8 sind nach vorne weisende kurze Stege 23 angeformt, die an ihrem freien Ende weitere Befestigungsstellen 24 für die Leuchteinheit aufweisen. Die Pfeiler 7,8 sind mit den Aufnahmen 15, der Einführvorrichtung 16, den Einhängeösen 17,18, den Befestigungsstellen 19,22 und 24, sowie dem Arm 20 und den Stegen 23 einstückig verbunden.

Die Pfeiler 7,8 sind miteinander separat zum Querträger 2 miteinander verbunden. Hierbei ist natürlich grundsätzlich denkbar, dass die Verbindung durch separate Verbindungsbauteile bewerkstelligt wird. Gemäß dem Ausführungsbeispiel ist diese stoffschlüssig mit den Pfeilern 7,8 ausgebildet und wird durch Längs- und Querrippen 25 gebildet, die zwischen den Pfeilern 7,8 am Querträger 2 angespritzt sind. Die Längs- und Querrippen 25 bilden gemeinsam ein den Querträger 2 einschließendes Netz, wobei die Pfeiler 7,8 von Rippen 25 abragen.

Die Rippen 25 tragen zwischen den Pfeilern 7,8 einen sich unmittelbar an die Querträgerunterseite anschließenden, längs des Querträgers 2 verlaufenden Dichtrahmen 26 für den Motorkühler, an dem an seiner Vorderseite 27 Befestigungselemente 28 für den Abstandsregel-Tempomat und ein unteres Befestigungselement 29 für eine Abweisplatte zur Verhinderung von Schneeansaugung in Form von Verschraubungsstellen mit ausgeformt sind. Des Weiteren tragen die Rippen 25 oberhalb des Querträgers 2 drei Auflageplatten 30,31,32 für den oberen Rand eines Karosseriebauteils, die sich ebenfalls längs des Querträgers 2 erstrecken. An der Auflageplatte 31 sind an der Vorderseite endseitig zwei obere Befestigungselemente 33 für die Abweisplatte zur Verhinderung von Schneeansaugung sowie an der Oberseite 34 der Auflageplatten 30,31,32 Befestigungselemente, vorzugsweise in Form von Verschraubungslöchern 35 für das anzubringende Karosseriebauteil ausgebildet. Die Auflageplatte 30 weist an der Oberseite 34 im Übergang zur mittleren Auflageplatte 33 Ausrichtelemente 36 für einen Stoßfänger und den Motorkühler auf. Zwischen der Auflageplatte 31 und dem Pfeiler 8 sowie zwischen der Auflageplatte 30 und dem Pfeiler 7 sind an den Rippen 25 Konsolen 37 mit Befestigungselementen 38 für den Motorkühler angeformt. An den Rippen 25 sind hinter den Auflageplatten 30 und 31 in der Querträgerebene liegende, nach hinten in Fahrzeugheckrichtung weisende Leitwände 39 für die Rohluftansaugung angeformt. Im Anschluss an die Konsolen 37 in Richtung der jeweiligen Querträgerenden 3,4 sind an den Rippen 25 oberseitig nach oben abgesetzte weitere Konsolen 40, 41 angeformt, die in etwa in der axialen Verlängerung der Pfeiler 7, 8 liegen und Aufnahmen 42,43 für Motorhaubenpuffer aufweisen. An der Innenseite 44 der Konsole 40 ist eine Einhängevorrichtung 45 für eine Stützstrebe zur Abstützung der Motorhaube ausgebildet. In etwa in der horizontalen Ebene der Aufnahmen 42,43 liegend sind an den Rippen 25 im Biegungsbereich 9, 10 des Querträgers 2 zwei nach vorne und außen abragende Konsolen 46 ausgeformt, die oberseitig weitere Auflageflächen und Befestigungselemente 47 für das anzubringende Karosseriebauteil aufweisen. An diesen Konsolen 46 sind im Übrigen die Stege 23 angeformt, an die sich auch die Pfeiler 7 und 8 anschließen. Alle geschilderten, aus angespritztem Kunststoff bestehenden Bauelemente und Flächen sind miteinander stoffschlüssig, d.h. einstückig verbunden.

Separat sind zwischen den Enden 3,4 des Querträgers 2 und den Pfeilern 7,8 auf dem Querträger 2 weitere Rippen 48 aufgespritzt, an denen oberseitig nach vorne abragende Konsolen 49 mit weiteren Aufnahmen 50 für Motorhaubenpuffer und eine Aufnahme 51 für die lösbare Befestigung eines Handhabungsgeräts zum Transport und Positionierung des Frontendmoduls 1 in der Montage angeformt sind. Zusätzlich ist an den Rippen 48 noch jeweils ein weiteres Befestigungselement 52 für die Anbindung der Leuchteinheit ausgebildet. Während die Konsolen 49 pfeilernah ausgeformt sind, ist das Befestigungselement 52 pfeilerfern ausgebildet. Dazwischen liegt die Aufnahme 51.

## Patentansprüche

1. Frontendmodul (1) für ein Kraftfahrzeug mit einem rohrförmigen Querträger (2) und Spritzgußbauteilen (7,8) aus Kunststoff, die an dem Querträger (2) angespritzt und von denen zumindest zwei der Spritzgußbauteile (7,8) separat zum Querträger (2) miteinander verbunden sind,
wobei die Spritzgußbauteile zwei senkrecht nach unten abragende axial beabstandete Pfeiler (7,8) beinhalten, die eine Motorkühleraufnahme (13) seitlich begrenzen und
von den Enden (3,4) des Querträgers (2) axial beabstandet sind, **dadurch gekennzeichnet, dass** der Querträger (2) angespritzte Längs- und Querrippen (25) aufweist, die gemeinsam ein den Querträger (2) einschließendes Netz bilden und die Pfeiler (7,8) im Bereich des Querträgers (2) miteinander verbinden.

2. Frontendmodul nach Anspruch 1,
**dadurch gekennzeichnet, dass**
die Verbindung stoffschlüssig und/oder formschlüssig ist.

3. Frontendmodul nach Anspruch 1 oder 2,
**dadurch gekennzeichnet, dass**
an zumindest einem der Pfeiler (7,8) einstückig eine vorzugsweise parallelogrammartige Aufnahme (15) einer Crashbox und/oder eine Einführvorrichtung (16) in den unteren Längsträger und/oder eine Einhängungsöse (17,18) für die Standheizung und/oder für den Waschwasserbehälter und/oder Befestigungsstellen (22,24) für die Leuchteinheit und/oder eine Befestigungsstelle (19) für die Z-Abstützung ausgebildet sind.

4. Frontendmodul nach einem der Ansprüche 1 bis 3,
**dadurch gekennzeichnet, dass**
die Rippen (25) zwischen den Pfeilern (7,8) einstückig mit einem Dichtrahmen (26) für den Motorkühler und/oder mit Befestigungselementen (28) für den Abstandsregel-Tempomat und/oder mit Befestigungselementen (29,33) für eine Abweisplatte zur Verhinderung von Schneeansaugung und/oder mit Befestigungselementen (38) für den Motorkühler und/oder mit Ausrichtelementen (36) für einen Stoßfänger und den Motorkühler und/oder mit Leitwänden (39) für die Rohluftansaugung und/oder mit Aufnahmen (42,43) für Motorhaubenpuffer und/oder mit einer Einhängevorrichtung (45) für eine Stützstrebe zur Abstützung der Motorhaube und/oder mit Auflageplatten (30,31,32) für den oberen Rand eines Karosseriebauteils verbunden sind.

5. Frontendmodul nach einem der Ansprüche 1 bis 4,
**dadurch gekennzeichnet, dass**
der Querträger (2) zwischen den Pfeilern (7,8) und den Enden (3,4) des Querträgers (2) aufgespritzte, miteinander verbundene Quer- und Längsrippen (48) aufweist, die einstückig Aufnahmen (50,51) für Motorhaubenpuffer und/oder für die Befestigung eines Handhabungsgeräts zum Transport und Positionierung des Frontendmoduls (1) in der Montage tragen.

6. Frontendmodul nach einem der Ansprüche 1 bis 5,
**dadurch gekennzeichnet, dass**
der Querträger (2) Befestigungselemente (6) für das Motorhaubenschloss aufweist.

## Claims

1. Front end module (1) for a motor vehicle, having a tubular cross-member (2) and injection moulded components (7, 8) made of plastic on the cross-member (2), at least two of which are connected to each other separately from the cross-member (2), wherein the injection moulded components contain two columns (7, 8) projecting vertically downwards and being axially spaced apart, which define the sides of an engine cooler receptacle (13), and are axially spaced apart from the ends (3, 4) of the cross-member (2),
**characterised in that**
the cross-member (2) has moulded longitudinal and transverse ribs (25) which together form a grid structure incorporating the cross-member (2), and connect the columns (7, 8) to each other in the region of the cross-member (2).

2. Front end module according to claim 1,
**characterised in that**
the connection is substance-substance bonded and / or positively locking.

3. Front end module according to claim 1 or 2,
**characterised in that**
a, preferably parallelogram-like, recess (15) of a crashbox and / or a lead-in device (16) into the lower longitudinal support and / or a hook eyelet (17, 18) for the radiator and / or for the washing water container and / or fixing points (22, 24) for the light unit and / or a fixing point (19) for the Z support are formed integrally on at least one of the columns (7, 8).

4. Front end module according to one of claims 1 to 3,
**characterised in that**
the ribs (25) between the columns (7, 8) are connected integrally with a sealing frame (26) for the engine cooler and / or with fixing elements (28) for the distance regulating cruise control and / or with fixing elements (29, 33) for a deflection plate to prevent snow being sucked in and / or with fixing elements (38) for the engine cooler and / or with alignment elements (36) for a bumper and the engine cooler and / or with vanes (39) for drawing in raw air and / or with recesses (42, 43) for the bonnet buffer and / or with a hanging device (45) for a support strut for supporting the bonnet and / or with bearing plates (30, 31, 32) for the upper edge of a bodywork component.

5. Front end module according to one of claims 1 to 4,
**characterised in that**
the cross-member (2) has, between the columns (7, 8) and the ends (3, 4) of the cross-member (2), injection-moulded interconnected transverse and longitudinal ribs (48) which integrally support recesses (50, 51) for bonnet buffer and / or for fixing of a handling unit for transport and positioning of the front end module (1) during assembly.

6. Front end module according to one of claims 1 to 5,
**characterised in that**
the cross-member (2) has fixing elements (6) for the bonnet lock.

## Revendications

1. Module (1) d'extrémité avant pour un véhicule automobile comprenant un longeron (2) tubulaire et des composants (7, 8) en plastique moulés sous pression, qui sont injectés directement sur le longeron (2) et dont au moins deux desdits composants (7, 8) en plastique moulés séparés du longeron (2) sont reliés ensemble, les composants moulés sous pression comprenant deux colonnes verticales (7, 8) éloignées axialement faisant saillie vers le bas, qui délimitent latéralement un logement (13) de radiateur de moteur et qui sont éloignées axialement des extrémités (3, 4) du longeron (2), **caractérisé en ce que** le longeron (2) présente des rainures longitudinales et transversales (25) qui forment conjointement un filet renfermant le longeron (2) et qui relient ensemble les colonnes (7,8) dans la zone du longeron (2).

2. Module d'extrémité avant selon la revendication 1, **caractérisé en ce que** la liaison est une liaison de matière et/ou une liaison par complémentarité de forme.

3. Module d'extrémité avant selon la revendication 1 ou la revendication 2, **caractérisé en ce que** sur au moins l'une des colonnes (7, 8) sont conçus d'un seul tenant un logement (15) de préférence en forme de parallélogramme d'un boîtier tampon et/ou un dispositif d'insertion (16) dans les supports longitudinaux inférieurs et/ou une boucle de suspension (17, 18) pour le chauffage auxiliaire et/ou pour le réservoir d'eau de lavage et/ou les points de fixation (22, 24) pour l'unité de phare et/ou un point de fixation (19) pour l'élément de support en Z.

4. Module d'extrémité avant selon l'une quelconque des revendications 1 à 3, **caractérisé en ce que** les rainures (25) d"un seul tenant entre les colonnes (7, 8) sont reliées au cadre d'étanchéité (26) pour le radiateur de moteur et/ou aux éléments de fixation (28) pour le régulateur de vitesse automatique et/ou aux éléments de fixation (29, 33) pour une plaque déflecteur destinée à éviter l'aspiration de la neige et/ou aux éléments de fixation (38) pour le radiateur de moteur et/ou à des éléments d'alignement (36) pour un pare-chocs et le radiateur de moteur et/ou à des parois de guidage (39) pour l'aspiration d'air propre et/ou à des logements (42, 43) pour un butoir de capot moteur et/ou à un dispositif de suspension (45) pour une barre directrice destinée à soutenir le capot moteur et/ou à des plaques de support (30, 31, 32) pour le bord supérieur d'un composant de carrosserie.

5. Module d'extrémité avant selon l'une quelconque des revendications 1 à 4, **caractérisé en ce que** le longeron (2) présente entre les colonnes (7, 8) et les extrémités du longeron (2) des rainures longitudinales et transversales (48) appliquées par projection, reliées entre elles, qui d'un seul tenant portent les logements (50, 51) pour le butoir de capot moteur et/ou pour la fixation d'un appareil de manipulation destiné au transport et au positionnement du module d'extrémité avant (1) pendant le montage.

6. Module d'extrémité avant selon l'une quelconque des revendications 1 à 5, **caractérisé en ce que** le longeron (2) présente des éléments de fixation (6) pour le verrou du capot moteur.
